# EUROPÄISCHE PATENTSCHRIFT

(11) **EP 3 143 865 B1**
(45) Veröffentlichungstag und Bekanntmachung des Hinweises auf die Patenterteilung: **15.08.2018**
(21) Anmeldenummer: 16188451.5
(22) Anmeldetag: 13.09.2016
(51) Int. Cl.: A01D 75/18, A01D 34/73

(54) **MÄHWERK**
MOWER UNIT
FAUCHEUSE

(30) Priorität: 15.09.2015 DE 102015115518
(43) Veröffentlichungstag der Anmeldung: 22.03.2017
(73) Patentinhaber: CLAAS Saulgau GmbH, 88348 Bad Saulgau (DE)
(72) Erfinder: Ober, Martin, 78736 Epfendorf-Trichtingen (DE)

(56) Entgegenhaltungen:
- EP-A1- 0 210 685
- EP-A1- 3 120 683
- DE-A1-102013 211 829
- FR-A- 1 523 440
- US-A- 2 737 871
- US-A- 3 469 378
- US-A- 4 538 402
- US-B1- 7 647 758

## Beschreibung

Die Erfindung betrifft ein Mähwerk nach dem Oberbegriff des Anspruchs 1. Des Weiteren betrifft die Erfindung einen Ausräumer für ein solches Mähwerk.

Aus der DE 32 02 926 A1 sowie aus der DE 198 56 746 A1 sind jeweils Mähwerke bekannt, die dem Mähen von Gras dienen. Derartige Mähwerke werden auch als Kreiselmäher bezeichnet.

Mähwerke, die dem Mähen von Gras dienen, verfügen über mindestens einen Mähbalken, wobei an jedem Mähbalken mehrere Mähorgane gelagert sind. Jedes Mähorgan ist dabei an einem Mähbalkendeckel des jeweiligen Mähbalkens gelagert, wobei jedes Mähorgan einen Mähteller, einen Messerträger und mindestens ein Messer umfasst. Das oder jedes Messer des jeweiligen Mähorgans ist über einen Zapfen, der mit dem Messerträger verbunden ist und sich durch eine Ausnehmung im Mähteller erstreckt, am jeweiligen Messerträger des jeweiligen Mähorgans gelagert. Beim Messerträger handelt es sich dabei vorzugsweise um eine Blattfeder, wobei zum Wechseln des oder jedes Messers der Messerträger relativ zum Mähteller verlagert werden kann, um so den jeweiligen Zapfen aus der jeweiligen Ausnehmung im Mähteller herauszubewegen und so das jeweilige Messer vom jeweiligen Zapfen entfernen zu können. Die DE 198 56 746 A1 offenbart hierzu eine Schnellwechseleinrichtung.

Es sind auch Mähwerke bekannt, bei welchen der Zapfen fest am Mähteller angeordnet ist und sich zur Sicherung in eine Ausnehmung an der Blattfeder erstreckt.

Weiterhin sind auch Systeme ohne Blattfeder bekannt, bei welchen der Zapfen oder Bolzen für das Messer am Mähteller gelagert ist und durch eine Klammer gesichert wird.

Darüber hinaus gibt es auch Systeme, bei welchen der Zapfen oder Bolzen am Mähteller verschraubt ist.

Bei derartigen Mähwerken kann sich im Bereich der Mähbalken, insbesondere auf dem Mähbalkendeckel des jeweiligen Mähbalkens, eine Schmutzschicht ablagern. Diese Schmutzschicht verursacht im Betrieb Probleme, insbesondere durch einen erhöhten Verschleiß sowohl am Mähteller als auch am Messerträger sowie durch ein erschwertes Anlaufen der Mähorgane aus dem Stillstand heraus. Dann, wenn sich auf dem Mähbalken eine ausgetrocknete und verkrustete Schmutzschicht gesammelt hat, kann hierdurch unter Umständen ein Anlaufen der Mähorgane aus dem Stillstand heraus überhaupt nicht mehr möglich sein. Dies ist von Nachteil und soll so weit wie möglich verhindert werden.

FR 1 523 440 A offenbart ein Scheibenmähwerk mit einem Mähbalken, an dessen Oberseite eine Reihe Mähscheiben mit Schneidmessern angeordnet sind, wobei an den Mähscheiben mindestens ein Abstreifer vorgesehen ist, der über die obere Fläche des Mähbalkens reibt.

Aus EP 3 120 683 A1 ist ein Messerrotor eines Mähbalkens eines Mähgeräts bekannt, mit einer Mähscheibe, wenigstens einem an der Mähscheibe befestigten Lagerbolzen, zur schwenkbaren Lagerung eines Mähmessers, einem an einer Unterseite der Mähscheibe angeordneten Federblech, zur Halterung des Mähmessers am Lagerbolzen, sowie wenigstens einem Schaber zum Entfernen von am Mähbalken haftenden Rückständen, wobei der Schaber zwischen dem Federblech und der Unterseite der Mähscheibe angeordnet und an der Mähscheibe zwischen Lagerbolzen und einer Rotationsachse der Mähscheibe lösbar befestigt ist. Der Verschleiß behaftete Teil des Schabers, nämlich ein Abstreiffinger, kann aus einem verschleißfesterem Material, beispielsweise aus gehärtetem Metall hergestellt und in Kunststoff eingepresst sein.

Hiervon ausgehend liegt der vorliegenden Erfindung die Aufgabe zugrunde, ein neuartiges Mähwerk zu schaffen.

Diese Aufgabe wird durch ein Mähwerk nach Anspruch 1 gelöst. Hiernach sind an dem Mähteller des jeweiligen Mähorgans mehrere dem Mähbalkendeckel zugewandte Ausräumer befestigt, wobei mindestens ein erster Ausräumer einen geringeren Abstand von dem Mähbalkendeckel aufweist als mindestens ein zweiter Ausräumer.

Nach der Erfindung sind am Mähteller jedes Mähorgans eines Mähbalkens eines Mähwerks mehrere dem Mähbalkendeckel zugewandte Ausräumer befestigt, wobei mindestens ein erster Ausräumer einen geringeren Abstand von dem Mähbalkendeckel aufweist als mindestens ein zweiter Ausräumer. Der oder jeder erste Ausräumer wirkt dabei der Ausbildung einer Schmutzschicht während des Mähbetriebs im Bereich des Mähbalkendeckels entgegen. Dem Ausbilden einer Schmutzschicht kann so effektiv entgegengewirkt werden, sodass einerseits insbesondere die Messerträger einem geringeren Verschleiß unterliegen und andererseits aus dem Stillstand heraus ein leichteres Anlaufen der Mähorgane bei geringerer Reibung möglich ist.

Vorzugsweise ist vorgesehen, dass eine dem Mähbalkendeckel zugewandte Seite des oder jedes ersten Ausräumers des jeweiligen Mähorgans einen geringeren Abstand vom Mähbalkendeckel aufweist als eine dem Mähbalkendeckel zugewandte Seite des Messerträgers des jeweiligen Mähorgans. Hiermit kann besonders effektiv der Ausbildung einer Schmutzschicht auf dem Mähbalkenträger entgegengewirkt werden. Insbesondere kann hierdurch verhindert werden, dass der Messerträger mit einer Schmutzschicht in Kontakt kommt und verschleißt.

Vorzugsweise ist vorgesehen, dass der oder jeder erste Ausräumer des jeweiligen Mähorgans zumindest abschnittsweise aus einem Hartmetall-Werkstoff oder einem Keramik-Werkstoff gefertigt, der verschleißfester als ein Stahl-Werkstoff ist. Der Hartmetall-Werkstoff oder Keramik-Werkstoff wird vorzugsweise in Form eines flachen Plättchens in einer Ausnehmung eines metallischen Trägers aufgenommen und steht über dessen Oberfläche hinaus. Besonders vorteilhaft gegenüber sogenannten aufgepanzerten Hartmetall-Beschichtungen ist hierbei ein höherer Hartstoffanteil bei den Hartmetall- bzw. Keramik-Elementen, die von einem Träger gehaltert werden. Hierdurch kann der oder jeder erster Ausräumer besonders verschleißfest ausgeführt werden.

Der oder jeder erste Ausräumer, der demnach in einem geringeren Abstand vom Balkendeckel aufweist als der oder jeder zweite Ausräumer, ist demnach besonders verschleißfest ausgeführt.

Gegenüber aufgepanzerten oder aufgeschweißten Hartbeschichtungen weisen die Hartmetall- bzw. Keramik-Elemente, die von einem Träger gehaltert werden, eine vorteilhafte durchgängige Schneidkante auf.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine perspektivische Ansicht eines mehrere Mähorgane aufweisenden Mähbalkens eines Mähwerks;
- Fig. 2: einen ausschnittsweisen Querschnitt durch ein Mähorgan;
- Fig. 3: eine perspektivische Ansicht von unten auf einen Mähteller und einen Messerträger eines Mähorgans, zusammen mit am Mähteller aufgenommenen Ausräumern und am Messerträger aufgenommenen Messern;
- Fig. 4: eine Seitenansicht des Mähtellers der Fig. 1;
- Fig. 5: eine Seitenansicht eines Ausräumers; und
- Fig. 6: eine perspektivische Ansicht des Ausräumers.

Die Erfindung betrifft ein Mähwerk, insbesondere ein Kreiselmähwerk, welches dem Mähen von insbesondere Halmgut, wie beispielsweise Gras dient.

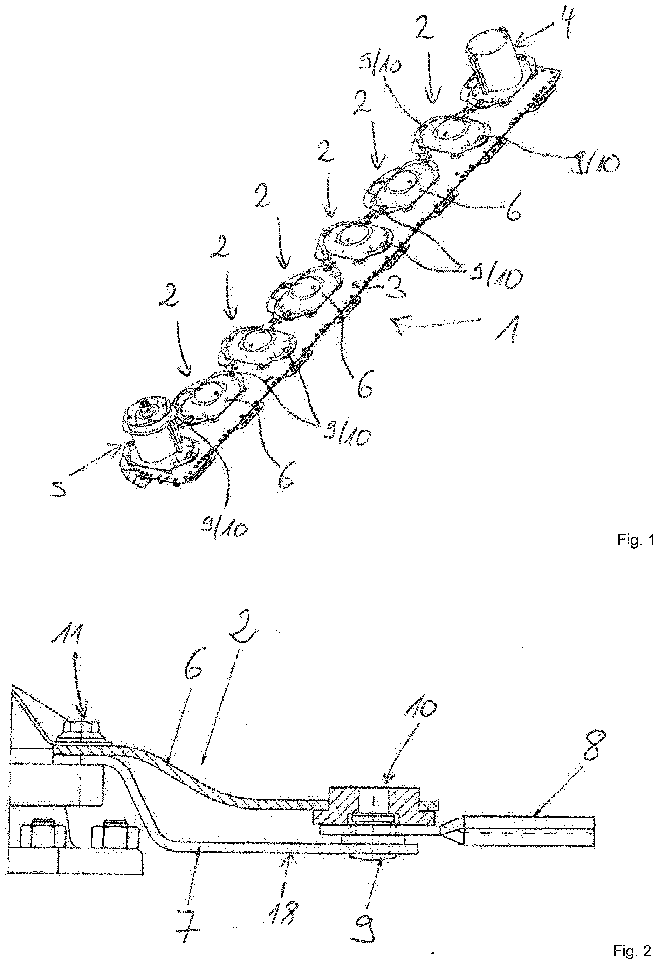

Ein solches Mähwerk verfügt über mindestens einen Mähbalken 1, wobei Fig. 1 eine perspektivische Ansicht eines solchen Mähbalkens 1 zeigt. Der in Fig. 1 gezeigte Mähbalken 1 verfügt über mehrere Mähorgane 2, die an einem als Mähbalkendeckel 3 ausgebildeten Tragelement gelagert sind.

Im Ausführungsbeispiel der Fig. 1 nimmt der Mähbalkendeckel 3 insgesamt sechs Mähorgane 2 auf, die in einer Reihe nebeneinander in Längsrichtung des Mähbalkendeckels 3 angeordnet sind, wobei an einer ersten Seite dieser Reihe aus Mähorganen 2 ein Antrieb 4 für die Mähorgane 2 angeordnet ist, und wobei an einer zweiten gegenüberliegenden Seite ein Leitelement 5 zum Transport von gemähtem Gras positioniert ist. Die Anzahl der Mähorgane 2 ist rein exemplarischer Natur.

Jedes Mähorgan 2 verfügt über einen Mähteller 6, einen Messerträger 7 sowie vorzugsweise über zwei Messer 8. Auch die Anzahl der Messer 8 ist rein exemplarischer Natur.

Die Messer 8 sind am Messerträger 7 befestigt, und zwar über jeweils einen Zapfen 9, der mit dem Messerträger 7 fest verbunden ist und an dem das jeweilige Messer 8 aufgenommen ist. Der Zapfen 9 erstreckt sich durch eine Ausnehmung 10 im Mähteller 6.

Zur Ausführung eines Messerwechsels kann der jeweilige Zapfen 9 durch Aufbiegen des Messerträgers 7 relativ zum Mähteller 6 aus der Ausnehmung 10 im Mähteller 6 herausbewegt werden, um dann zum Beispiel ein verschlissenes Messer 8 vom Zapfen 9 zu entfernen und gegen ein neues Messer auszutauschen. Gemäß Fig. 2 sind der Messerträger 7 und der Mähdeckel 6 des jeweiligen Mähorgans 2 miteinander über eine Schraubverbindung 11 verschraubt, wobei im Betrieb des Mähbalkens 1 bei rotierenden Mähorganen 2 der Messerträger 7, die Messer 8 und der Mähteller 6 der jeweiligen Mähorgane 2 rotieren. Die Messer werden dabei durch Fliehkräfte nach radial außen verlagert.

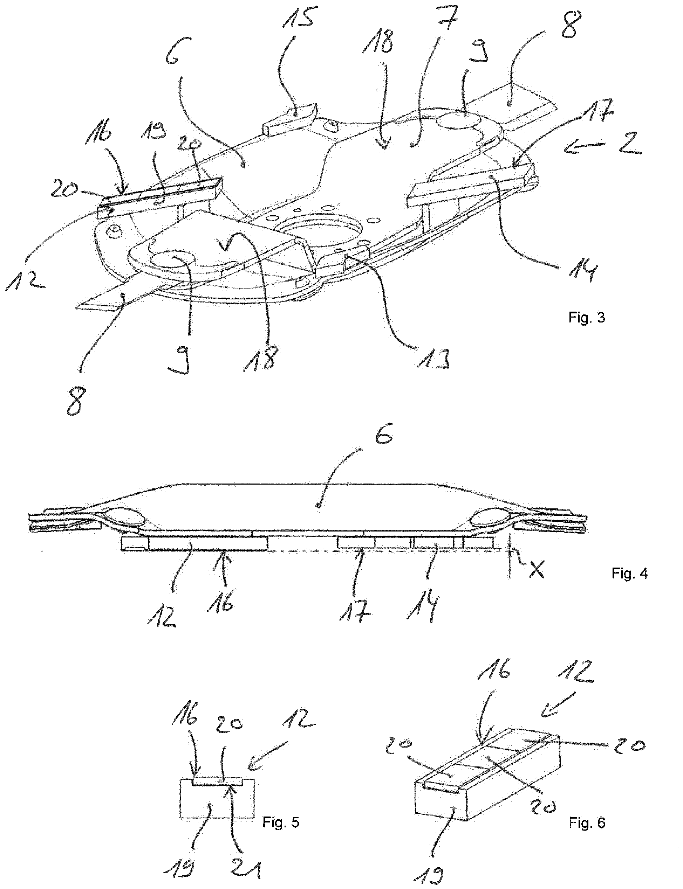

Um der Ausbildung einer Schmutzschicht im Bereich des Mähbalkendeckels 3 entgegenzuwirken, sind an dem Mähteller 6 des jeweiligen Mähorgans 2 mehrere dem Mähbalkendeckel 3 zugewandte Ausräumer 12, 13, 14, 15 montiert. Mindestens ein erster Ausräumer, im gezeigten Ausführungsbeispiel der Ausräumer 12, weist einen geringeren Abstand vom Mähbalkendeckel 3 auf als mindestens ein zweiter Ausräumer, im gezeigten Ausführungsbeispiel als die Ausräumer 13, 14 und 15. So weist eine dem Mähbalkendeckel 3 zugewandte Seite 16 des ersten Ausräumers 12 des Mähorgans 2 einen geringeren Abstand vom Mähbalkendeckel 3 auf als eine dem Mähbalkendeckel 3 zugewandte Seite 17 des oder jedes zweiten Ausräumers 13, 14, 15 des Mähorgans 2. Fig. 4 veranschaulicht in diesem Zusammenhang, dass die dem Mähbalkendeckel 3 zugewandte Seite 16 des ersten Ausräumers 12 um das Maß X näher zum Mähbalkendeckel 3 angeordnet ist als die dem Mähbalkendeckel 3 zugewandten Seiten 17 der zweiten Ausräumer 13, 14, 15.

Vorzugsweise ist die dem Mähbalkendeckel 3 zugewandte Seite 16 - auch Unterseite genannt - des ersten Ausräumers 12, der einen geringeren Abstand vom Mähbalkendeckel 3 aufweist als die zweiten Ausräumer 13, 14, 15, unterhalb einer dem Mähbalkendeckel 3 zugewandte Seite 18 - ebenfalls auch Unterseite genannt - des Messerträgers 7 des jeweiligen Mähorgans 2 positioniert, sodass demnach die Unterseite 16 des ersten Ausräumers 12 einen geringeren Abstand von einer Oberseite des Mähbalkendeckels 3 aufweist als die Unterseite 18 des Messerträgers 7.

Hierdurch kann der Messerträger 7 der Mähorgane 2 besonders effektiv vor einem Verschleiß geschützt werden, der durch Reibung mit sich im Bereich auf der Oberseite des Mähbalkendeckels 3 ablagernden Verschmutzungen verursacht wird. Der oder jeder erster Ausräumer 12, dessen Unterseite 16 im Vergleich zu den Unterseiten 17 der anderen Ausräumer 13, 14, 15 und der Unterseite 18 des Messerträgers 7 den geringsten Abstand vom Mähbalkendeckel 3 aufweist, entfernt im Bereich des Mähbalkendeckels 3 sich im Betreib ablagernde Verschmutzungen und wirkt so der Ausbildung einer Schmutzschicht auf dem Mähbalkendeckel 3 effektiv entgegen.

Es besteht daher keine Gefahr, dass der Messerträger 7 der Mähorgane 2 einem erhöhten Verschleiß ausgesetzt ist. Weiterhin kann stets ein Anlaufen des Mähorgans 2 aus dem Stillstand heraus mit geringer Reibung gewährleistet werden, da nur ein Ausräumer tiefer steht und in die Schmutzschicht eintaucht sowie diese beim Anlaufen oder im Betrieb abschabt bzw. entfernt.

Die hier vorliegende Erfindung betrifft weiterhin einen Ausräumer für ein Mähorgan 2, wobei Fig. 5 und 6 einen erfindungsgemäßen Ausräumer 12 zeigen. Der Ausräumer 12 ist zumindest abschnittsweise aus einem Hartmetall-Werkstoff oder einem Keramik-Werkstoff gefertigt, der verschleißfester als ein Stahl-Werkstoff ist.

Als Keramik-Werkstoff kann ein technischer Keramik-Werkstoff wir ein Oxidkeramik-Werkstoff genutzt werden. Dabei ist der Ausräumer 12 zumindest an denjenigen Abschnitt aus dem Hartmetall-Werkstoff oder dem Keramik-Werkstoff gefertigt, der im am Mähorgan 2 verbauten Zustand den geringsten Abstand vom Mähbalkendeckel 3 aufweist.

Im gezeigten Ausführungsbeispiel der Fig. 5 und 6 weist der erfindungsgemäße Ausräumer 12 einen Grundkörper 19 aus einem Stahl-Werkstoff auf, der mindestens ein Element 20 aus einem Hartmetall-Werkstoff oder einem Keramik-Werkstoff trägt, welches verschleißfester als der Stahl-Werkstoff ist. Im Ausführungsbeispiel der Fig. 5 und 6 ist dabei in diejenige Seite 16 des Grundkörpers 19 des Ausräumers 12, die im am Mähorgan 2 verbauten Zustand dem Mähbalkendeckel 3 zugewandt ist, eine Ausnehmung 21 eingebracht, in welche das oder jedes Element 20 aus dem Hartmetall-Werkstoff oder dem Keramik-Werkstoff eingesetzt ist.

Gemäß Fig. 6 sind im gezeigten Ausführungsbeispiel drei Elemente 20 aus dem Hartmetall-Werkstoff oder dem Keramik-Werkstoff in die Ausnehmung 21 des Grundkörpers 19 des Ausräumers 12 eingesetzt, wobei diese Elemente 20 gegenüber dem Grundkörpers 19 vorstehen und den Abstand der dem Mähbalkendeckel 3 zugewandten Seite 16 des Ausräumers 12 vom Mähbalkendeckel 3 definieren.

Das oder jedes Element 20 aus dem Hartmetall-Werkstoff oder dem Keramik-Werkstoff ist dabei vorzugsweise mit dem Grundkörper 19 des jeweiligen Ausräumers 12 verlötet, verklebt oder verschraubt.

In der bevorzugten Ausführungsform der Erfindung ist vorgesehen, dass beim Mähwerk der Fig. 1 bis 3 der oder jeder erste Ausräumer 12, der einen geringen Abstand von dem Mähbalkendeckel 3 aufweist als der oder jeder zweite Ausräumer 13, 14 und 15, im Sinne des Ausführungsbeispiels der Fig. 5 und 6 ausgebildet ist, also abschnittsweise aus einem Hartmetall-Werkstoff oder einem Keramik-Werkstoff gefertigt ist, der verschleißfester als ein Stahl-Werkstoff ist. So zeigt Fig. 3 den Ausräumer 12 mit den Elementen 20 aus dem Hartmetall-Werkstoff oder dem Keramik-Werkstoff im am Mähteller 6 verbauten Zustand.

Am Mähteller 6 sind mehrere Ausräumer befestigt, wobei mindestens ein erster Ausräumer 12 gegenüber mindestens einem zweiten Ausräumer 13, 14, 15 tiefer gesetzt ist, sodass die Unterseite 16 des oder jedes ersten Ausräumers 12 demnach einen geringeren Abstand von Mähbalkendeckel 3 aufweist als die Unterseite 17 des oder jedes zweiten Ausräumers 13, 14, 15.

Der oder jeder erste Ausräumer 12, der einen geringeren Abstand vom Mähbalkendeckel 3 aufweist als der oder jeder zweite Ausräumer 13, 14, 15, ist vorzugsweise zumindest abschnittsweise im Bereich seiner dem Mähbalkendeckel 3 zugewandten Seite 16 aus einem Hartmetall-Werkstoff oder Keramik-Werkstoff gefertigt, der verschleißfester als ein Stahl-Werkstoff ist.

Mit der Erfindung kann der Ablagerung von Verschmutzungen und damit dem Ausbilden einer Schmutzschicht im Bereich des Mähbalkendeckels 3 effektiv entgegengewirkt werden. Messerträger 7 der Mähorgane 2 sind einem geringerem Verschleiß ausgesetzt, da dieselben nicht mehr in Kontakt mit einer Schmutzschicht im Bereich des Mähbalkendeckels 3 gelangen können. Ferner wird ein reibungsarmes Anlaufen der Mähorgane 2 aus dem Stillstand heraus ermöglicht, da dieselben einer geringeren oder keiner Reibung mit einer Schmutzschicht im Bereich des Mähbalkendeckels 3 ausgesetzt sind.

Die Erfindung ist nicht nur auf die beschriebenen Mähwerke beschränkt, sondern kann auch an Mähwerken angewendet werden, deren Mähorgane mit anderen Befestigungssystemen für die Messer ausgestattet sind. Dies können beispielsweise Mähwerke sein, bei welchen der Lager-Zapfen für das Messer fest am Mähteller angeordnet ist und sich zur Sicherung in eine Ausnehmung an der Blattfeder erstreckt. Ebenso sind auch Mähwerke möglich, deren Befestigungssysteme ohne Blattfeder auskommen. Bei solchen Systemen wird der Zapfen bzw. Bolzen, der das Messer haltert am einen Ende am Mähteller gelagert und durch eine Klammer gesichert. Am anderen Ende weist der Zapfen bzw. Bolzen einen Absatz, Kragen oder ähnliches als Anschlag für das Messer auf, der ein Herausfallen des Messers verhindert. Weiterhin sind auch Systeme denkbar, bei welchen der Messer-Zapfen oder -Bolzen am Mähteller verschraubt ist.

### Bezugszeichenliste

- 1: Mähbalken
- 2: Mähorgan
- 3: Mähbalkendeckel
- 4: Antrieb
- 5: Leitelement
- 6: Mähteller
- 7: Messerträger
- 8: Messer
- 9: Zapfen
- 10: Ausnehmung
- 11: Schraubverbindung
- 12: Ausräumer
- 13: Ausräumer
- 14: Ausräumer
- 15: Ausräumer
- 16: Seite
- 17: Seite
- 18: Seite
- 19: Grundkörper
- 20: Element
- 21: Ausnehmung

## Patentansprüche

1. Mähwerk, mit mindestens einem Mähbalken (1), wobei der oder jeder Mähbalken (1) mehrere an einem als Mähbalkendeckel (3) ausgebildeten Tragelement gelagerte Mähorgane (2) umfasst, wobei jedes Mähorgan (2) einen Mähteller (6) und mindestens ein Messer (8) umfasst, welches direkt oder über einen Messerträger (7) am Mähteller (6) angeordnet ist, wobei an dem Mähteller (6) des jeweiligen Mähorgans (2) mehrere dem Mähbalkendeckel (3) zugewandte Ausräumer (12, 13, 14, 15) befestigt sind, **dadurch gekennzeichnet, dass** mindestens ein erster Ausräumer (12) einen geringeren Abstand von dem Mähbalkendeckel (3) aufweist als mindestens ein zweiter Ausräumer (13, 14, 15).

2. Mähwerk nach Anspruch 1, **dadurch gekennzeichnet, dass** eine dem Mähbalkendeckel (3) zugewandte Seite (16) des oder jedes ersten Ausräumers (12) des jeweiligen Mähorgans (2) einen geringeren Abstand vom Mähbalkendeckel (3) aufweist als eine dem Mähbalkendeckel (3) zugewandte Seite (17) des oder jedes zweiten Ausräumers (13, 14, 15) des jeweiligen Mähorgans (2).

3. Mähwerk nach Anspruch 1 oder 2, **dadurch gekennzeichnet, dass** eine dem Mähbalkendeckel (3) zugewandte Seite (16) des oder jedes ersten Ausräumers (12) des jeweiligen Mähorgans (2) einen geringeren Abstand vom Mähbalkendeckel (3) aufweist als eine dem Mähbalkendeckel (3) zugewandte Seite (18) des Messerträgers (7) des jeweiligen Mähorgans (2).

4. Mähwerk nach einem der Ansprüche 1 bis 3, **dadurch gekennzeichnet, dass** an dem Mähteller (6) des jeweiligen Mähorgans (2) ein einziger erster Ausräumer (12) einen geringeren Abstand von dem Mähbalkendeckel (3) aufweist als mindestens ein zweiter Ausräumer (13, 14, 15).

5. Mähwerk nach einem der vorangehenden Ansprüche, **dadurch gekennzeichnet, dass** der Ausräumer (12) zumindest abschnittsweise aus einem Hartmetall-Werkstoff oder einem Keramik-Werkstoff gefertigt ist.

6. Mähwerk nach Anspruch 5, **dadurch gekennzeichnet, dass** der Ausräumer einen Grundkörper (19) aus einem Stahl-Werkstoff aufweist, mindestens ein Element (20) aus einem Hartmetall-Werkstoff oder einem Keramik-Werkstoff trägt, wobei das oder jedes Element (20) aus dem Hartmetall-Werkstoff oder dem Keramik-Werkstoff einem Mähbalkendeckel (3) eines das Mähorgan (2) aufweisenden Mähbalkens (1) zugewandt ist.

7. Mähwerk nach Anspruch 6, **dadurch gekennzeichnet, dass** das oder jedes Element (20) aus dem Hartmetall-Werkstoff oder dem Keramik-Werkstoff mit dem Grundkörper (19) verlötet, verklebt oder verschraubt ist.

8. Mähwerk nach einem der vorangehenden Ansprüche, **dadurch gekennzeichnet, dass** das mindestens eine Messer (8) über einen Zapfen (9), der mit dem Messerträger (7) verbunden ist und sich durch eine Ausnehmung (10) im Mähteller (6) erstreckt, am Messerträger (7) gelagert ist.

## Claims

1. A mowing mechanism comprising at least one mowing bar (1), wherein the or each mowing bar (1) includes a plurality of mowing members (2) mounted to a carrier element in the form of a mowing bar cover (3), wherein each mowing member (2) includes a mowing plate (6) and at least one blade (8) which is arranged on the mowing plate (6) directly or by way of a blade carrier (7), wherein a plurality of strippers (12, 13, 14, 15) which face towards the mowing bar cover (3) are fixed to the mowing plate (6) of the respective mowing member (2), **characterised in that** at least one first stripper (12) is at a smaller spacing from the mowing bar cover (3) than at least one second stripper (13, 14, 15).

2. A mowing mechanism according to claim 1 **characterised in that** a side (16) facing towards the mowing bar cover (3) of the or each first stripper (12) of the respective mowing member (2) is at a smaller spacing from the mowing bar cover (3) than a side (17) facing towards the mowing bar cover (3) of the or each second stripper (13, 14, 15) of the respective mowing member (2).

3. A mowing mechanism according to claim 1 or claim 2 **characterised in that** a side (16) facing towards the mowing bar cover (3) of the or each first stripper (12) of the respective mowing member (2) is at a smaller spacing from the mowing bar cover (3) than a side (18) facing towards the mowing bar cover (3) of the blade carrier (7) of the respective mowing member (2).

4. A mowing mechanism according to one of claims 1 to 3 **characterised in that** on the mowing plate (6) of the respective mowing member (2) a single first stripper (12) is at a smaller spacing from the mowing bar cover (3) than at least one second stripper (13, 14, 15).

5. A mowing mechanism according to one of the preceding claims **characterised in that** the stripper (12) is made at least portion-wise from a carbide material or a ceramic material.

6. A mowing mechanism according to claim 5 **characterised in that** the stripper has a main body (19) comprising a steel material, at least one element (20) comprising a carbide material or a ceramic material, wherein the or each element (20) comprising the carbide material or the ceramic material faces towards a mowing bar cover (3) of a mowing bar (1) having the mowing member (2).

7. A mowing mechanism according to claim 6 **characterised in that** the or each element (20) comprising the carbide material or the ceramic material is brazed, glued or screwed to the main body (19).

8. A mowing mechanism according to one of the preceding claims **characterised in that** the at least one blade (8) is mounted to the blade carrier (7) by way of a pin (9) which is connected to the blade carrier (7) and extends through an opening (10) in the mowing plate (6).

## Revendications

1. Tête de fauchage comprenant au moins un lamier (1), le ou chaque lamier (1) comportant plusieurs organes de fauche (2) montés sur un élément porteur conformé en couvercle de lamier (3), chaque organe de fauche (2) comportant un disque de fauche (6) et au moins un couteau (8) qui est disposé directement ou par l'intermédiaire d'un porte-couteau (7) sur le disque de fauche (6), sur le disque de fauche (6) de l'organe de fauche respectif (2) étant fixés plusieurs débourreurs (12, 13, 14, 15) tournés vers le couvercle de lamier (3), **caractérisée en ce qu'**au moins un premier débourreur (12) présente, par rapport au couvercle de lamier (3), un écartement plus réduit qu'au moins un deuxième débourreur (13, 14,15).

2. Tête de fauchage selon la revendication 1, **caractérisée en ce qu'**un côté, tourné vers le couvercle de lamier (3), du ou de chaque premier débourreur (12) de l'organe de fauche respectif (2) présente, par rapport au couvercle de lamier (3), un écartement plus réduit qu'un côté (17), tourné vers le couvercle de lamier (3), du ou de chaque deuxième débourreur (13, 14, 15) de l'organe de fauche (2).

3. Tête de fauchage selon la revendication 1 ou 2, **caractérisée en ce qu'**un côté (16), tourné vers le couvercle de lamier (3), du ou de chaque premier débourreur (12) de l'organe de fauche respectif (2) présente, par rapport au couvercle de lamier (3), un écartement plus réduit qu'un côté (18), tourné ver le couvercle de lamier (3), du porte-couteau (7) de l'organe de fauche respectif (2).

4. Tête de fauchage selon une des revendications 1 à 3, **caractérisée en ce que**, sur le disque de fauche (6) de l'organe de fauche respectif (2), un premier débourreur unique (12) présente, par rapport au couvercle de lamier (3), un écartement plus réduit qu'au moins un deuxième débourreur (13, 14, 15).

5. Tête de fauchage selon une des revendications précédentes, **caractérisée en ce que** le débourreur (12) est réalisé au moins par endroits dans un matériau à base de métal dur ou dans un matériau en céramique.

6. Tête de fauchage selon la revendication 5, **caractérisée en ce que** le débourreur comporte un corps de base (19) en matériau à base d'acier, porte au moins un élément (20) en matériau à base de métal dur ou en matériau en céramique, le ou chaque élément (20) en matériau à base de métal dur ou en matériau en céramique étant tourné vers un couvercle de lamier (3) d'un lamier (1) comportant l'organe de fauche (2).

7. Tête de fauchage selon la revendication 6, **caractérisée en ce que** le ou chaque élément (20) en matériau à base de métal dur ou en matériau en céramique est brasé, collé ou vissé au corps de base (19).

8. Tête de fauchage selon une des revendications précédentes, **caractérisée en ce que** le au moins un couteau (8) est monté sur le porte-couteau (7) par l'intermédiaire d'un téton (9) qui est relié au porte-couteau (7) et qui s'étend à travers un évidement (10) dans le disque de fauche (6).
